# EUROPÄISCHE PATENTSCHRIFT

(11) **EP 0 668 242 B1**
(45) Veröffentlichungstag und Bekanntmachung des Hinweises auf die Patenterteilung: **21.07.1999**
(21) Anmeldenummer: 95105925.2
(22) Anmeldetag: 15.03.1993
(51) Int. Cl.: C02F 1/00, B01D 21/24

(54) **Vorrichtung zur über den Beckenumfang gleichmässig verteilten Entnahme von geklärtem Abwasser aus Rundbecken**
Device for the uniformly distributed removal of purified water from the circumference of a circular settling tank
Dispositif pour le prélèvement régulièrement distribué des eaux usées clarifiées dans la périphérie d'un bassin circulaire de sédimentation

(30) Priorität: 09.04.1992 DE 9204960 U; 20.07.1992 DE 4223863
(43) Veröffentlichungstag der Anmeldung: 23.08.1995
(62) Teilanmeldung aus: 93906525.6
(73) Patentinhaber: Hans Huber GmbH & Co. KG, D-92334 Berching (DE)
(72) Erfinder: Valentin, Franz, Prof. Dr., D-80333 München (DE)
(74) Vertreter: Lewald, Dietrich, Dipl.-Ing.

(56) Entgegenhaltungen:
- CH-A- 229 433
- DE-A- 4 028 148
- US-A- 3 447 688
- US-A- 4 994 179

## Beschreibung

Die Erfindung betrifft eine Vorrichtung zur über den Beckenumfang gleichmäßig verteilten Entnahme von geklärtem Abwasser aus Rundbecken, die über eine zentrische Einleitung des Abwassers verfügen, mit einem unter Druck durchströmten mit Durchbrechungen versehenen Tauchrohr.

Viele Klärbecken verwenden eine kreisrunde Rinne am Beckenrand als Ablauf. Im Freispiegel fließt Klarwasser über eine gerade oder gezackte Zahnschwelle. Die Entnahmemenge nimmt mit dem Überstauungsgrad zu. Das kreisrunde Klärbecken funktioniert nur dann optimal, wenn die Quellströmung aus dem Mittelbauwerk in alle Richtungen gleichmäßig verteilt abfließen kann.

Dieser Ablauf wird ungünstig durch Algenwachstum im Bereich der Zahnschwelle einerseits beeinflußt. Andererseits verändern schon kleine Strömungen der Wasseroberfläche, wie z.B. Wind, die Symmetrie. Im ungünstigsten Fall bleibt damit etwa der halbe Rinnenumfang ungenützt (völlig unterschiedliche Windverhältnisse auf der Lee, verglichen mit der Luvseite. Dies bedeutet, daß über den restlichen Teil die doppelte Menge abströmt, während sich an der Leeseite die Absetzleistung verringert. Schwimmschlamm wird verstärkt mitgerissen, der Betreiber wird mit höhron Abgaben belastet.
Weitere Schwierigkeiten sind darin zu sehen, daß aus den oben genannten Gründen die Zahnschwellenmontage ein aufwendiges Ausnivellieren erfordert. Zudem ist das Wasserniveau nicht getrennt von der Ablaufmenge regelbar.
Neben einem hohen Reinigungsaufwand der Rinnen ist mit einer hohen Ablaufbelastung mit Feststoffen zu rechnen.

Der Erfindung liegt demgegenüber die Aufgabe zugrunde, die Ablaufmenge zu vergleichmäßigen, dabei zu vergrößern und den Wasserstand im Rundbecken unabhängig vom Abzug des geklärten Abwassers zu machen.

Gelöst wird diese Aufgabe dadurch, daß das Tauchrohr als unterhalb der Oberfläche des geklärten Abwassers konzentrisch zur Vertikalachse des Rundbeckens angeordnete geschlossene Ringleitung ausgebildet ist und daß die Ringleitung mit dem außerhalb des Rundbeckens angeordneten Ablaufschacht über eine Austrittssammelleitung verbunden ist und eine Mengensteuerung derart aufweist, das die Veränderung des Höhenunterschiedes zwischen dem Wasserstand im Becken und dem Wasserstand im Ablaufschacht die Menge steuert.

Es wird also von unterhalb der Oberfläche des geklärten Abwassers eine gleichmäßige regelbare Menge zum Ablauf gebracht.

Der Ablauf ist also mengengesteuert.

Vorzugsweise ist das Tauchrohr als Ringleitung mit Durchbrechungen gleichen Abstandes voneinander ausgebildet.

Zweckmäßig ist eine höhenverstellbare Ablaufeinrichtung zum Ablaufschacht hin angeordnet.

Im allgemeinen wird man die Ringleitung äquidistant zum zentrischen Zulauf anordnen.

Bei richtiger Dimensionierung der Rohröffnungen und -durchmesser genügt gegebenenfalls eine einzige Ablaufleitung durch die Beckenwand. Diese führt zu einer Überlaufschwelle, welche unabhängig vom Wasserspiegel geregelt wird. Die Ablaufeinrichtung selbst kann eine Regulierschwelle sein.

Die Mengensteuerung kann durch Veränderung des Höhenunterschiedes zwischen dem Wasserstand im Becken und dem Wasserstand im Ablauf vorgenommen werden.

Durch die Maßnahme nach der Erfindung kann der Wasserstand im Becken auf variable Höhe gefahren werden.

Der Rohrinnendruck der Rohrleitung am Rohrumfang kann so hoch festgelegt werden, daß am Rohrende noch ein Abfluß unter Druck gewährleistet ist. Die Ablaufgeschwindigkeit am Austritt aus der Rohrleitung kann maximal, deren Austritt diametral gegenüber jenem Austritt nahe Null sein.

Die Überstauung über dem Tauchrohr kann unabhängig von der Abflußmenge regelbar gefahren werden.

In Weiterbildung nach der Erfindung kann das Rundbecken auch als Pufferbecken verwendbar sein.

Eine Pumpe ist nicht vorgesehen.

Die Höhendifferenz ist für das Gefälle und auch für die Geschwindigkeit verantwortlich.

Durch Heben und Senken der Ablaufeinrichtung kann die Regelung, automatisch, falls gewünscht, erfolgen.

Der Auslauf mit Tauchrohren kann bevorzugt zusammen mit einem Zulauf mit der sog. Coanda-Tulpe (deutsches Gebrauchsmuster G 91 12 947.8 eingetragen am 30.1.1992) betrieben werden.

Durch die Maßnahme nach der Erfindung wird die Betriebssicherheit erhöht, der Wartungsbedarf verringert, die Feststoffabscheidung verbessert, genauso wie der Reinigungsgrad. Die Abwasserabgaben werden gesenkt.

Durch die Anordnung eines Tauchrohres im Abstand unterhalb des Freispiegels, wo schon stabile Verhältnisse herrschen, schützt das geschlossene Rohr das Entnahmewasser vor Licht und verhindert dadurch die Fotosynthese. Die Ablaufmenge wird unabhängig von der Überstauung.

Die Vorteile der genauen Regelung und des erhöhten Ablaufs werden durch den Betrieb der Sammelleitung als gefülltes Rohr gewährleistet. Die Austrittssammelleitung führt zentral durch die Beckenaußenwand zu der Überfallschwelle, wo eine separate Regelung erfolgt. Eine Anpassung an den gewünschten Betriebszustand ist möglich. Aufgrund des geschlossenen Rohrsystems kann die Ablaufmenge getrennt eingestellt werden. Unabhängig von der Größe der Öffnungen ist die maximale Abflußmenge genau berechenbar. Statisch erfolgt die Abstützung auf Konsolen.

Bedarfsweise wird eine höhenverstellbare Tauchwand direkt am Tauchrohr angebracht.

Die als Sammelleitung ausgebildete Rohrleitung wird diskontinuierlich beaufschlagt.

Bei hohem Aufstau wird die notwendige Ungleichförmigkeit des Zuflusses längs des Rohres bei gleichem Rohrdurchmesser äußerst gering.

Für große Abflußmengen ist es denkbar, den Rohrdurchmesser stufenweise dem zugehörigen Durchfluß anzupassen.

Bei der Berechnung der Anlage sind Verluste wie Rohrreibung, gegebenenfalls Stoßverluste, Druckhöhenverluste, Beschleunigungsverluste infolge der Zuströmung senkrecht zur Fließrichting im Rohr zu berücksichtigen. Bestehende Anlagen können durch nachträglichen Einbau der Maßnahme nach der Erfindung saniert werden..

Vorzugsweise ist es möglich, zur weiteren Verbesserung die Gleichförmigkeit des Abzugs, das Tauchrohr gestuft zunehmenden Durchmessern gegen den Auslauf aus dem Becken abzustufen. Die Geschwindigkeit wird z.B. auf eine mittlere Geschwindigkeit von 0,3 m/sec. am Ende der Rohrleitung begrenzt, die Durchmesser werden insgesamt verringert, da nicht mehr mit einem durchgehend großen Durchmesser gefahren werden muß. Der Übergang kann auch allmählich durch praktisch kontinuierliche Durchmesserzunahme vorgenommen werden.

Eine besonders günstige Kombination ergibt die Aufweitung des Rohres gegen den Ablauf hin bei z.B. gleichzeitiger Verminderung der Schlitzlänge. Dies hat den weiteren Vorteil, daß in jedem Rohrabschnitt die maximale Geschwindigkeit erreicht werden kann, was ohne Abstufung nur am Rohrende der Fall wäre. Das etwaige Ausfallen eingetragener Schlammflocken wegen der dann kleiner Schleppspannungen wird vermieden.

Es wird nicht verkannt, daß Klärbecken mit Rohren mit kreisförmigen Öffnungen bekannt sind (SU-PS 13 67 998 A1), wobei aus einem Klärbecken Wasser in unterschiedlichen Tiefen dadurch abgezogen wird, daß ein Verschlußorgan an dem jeweiligen Rohr geöffnet wird. Eine Lösung für die hier anstehende Aufgabe ist dieser Schrift nicht zu entnehmen.

Weiterhin ist ein mechanisch über einen Unterdruck gesteuerter Entleerungshahn für den Ausfluß einer geschichteten Flüssigkeit aus einem Behälter bekannt (CH-PS 79062). Der Hahn hat kreisförmige Öffnungen, weitere Gemeinsamkeiten sind nicht gegeben.

Schließlich ist bekannt (US-PS 30 17 998) eine Vorrichtung zum Abscheiden einer festen Phase aus einer Flüssigkeit. Der Einlauf zum Absetztank stellt eine Verteilerrinne mit rechteckigem Querschnitt und kreisförmigen Bodenöffnungen dar. Bei kleinen und üblichen Zuflüssen erfolgt der Zulauf über die Bodenöffnungen, bei größeren Zuflüssen über den Überfall am Rinnenrand. Es handelt sich nicht um eine Vorrichtung zur gleichmäßigen Entnahme von geklärtem Abwasser aus gegebenenfalls sehr großen Rundbecken und schon gar nicht ein vollständig gefülltes Tauchrohr, wo lediglich eine Druckdifferenz zwischen dem Rohrinnendruck und dem Rohraußendruck genügt.

Die CH-A-229 433 beschreibt eine in der oder an der Klärbeckenwand angeordnete angenähert horizontale Leitung, die mit einem horizontal über dem Wasserspiegel liegenden Schlitz mit dem Klärbecken in Verbindung steht, wobei der Schlitz über die gesamte Leitungslänge durchgeht.

Ebenfalls bekannt sind aus der DE-A 40 28 148 gerade Tauchrohre, die sternförmig in das Innere des Beckens hineinragen. Von diesem Stand der Technik war ausgegangen worden.

Aus der US-4,994,179, die eine Vortrenneinrichtung betrifft, ist eine Art Gabelrohr mit Durchbrechungen in den geraden Stücken und keinen Durchbrechungen in den Krümmerstücken bekannt. Der Zulauf erfolgt in einem Hydrozyklonzylinder, der unter einem Sammelkegel angeordnet ist, wo der Hydrozyklon einen schmalen Durchlaß aufweist. Es wird so den leichteren Komponenten in Folge einer erzeugten Spiralströmung ermöglicht, oben am Zylinder nach oben abzuströmen, die schwereren Komponenten werden dem unten befindlichen Separator zugeführt.

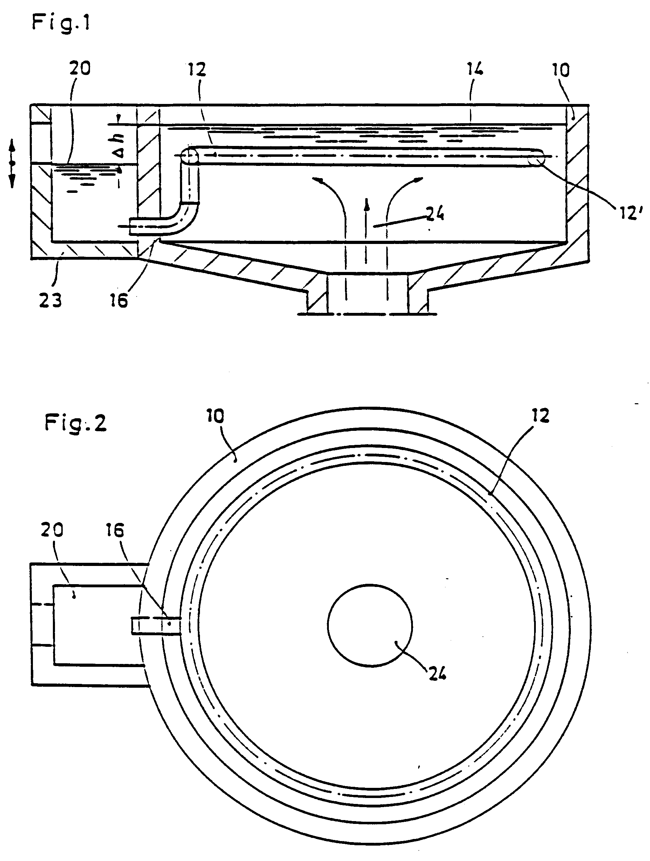

Beispielsweise Ausführungsformen der Erfindung sollen nun anhand der beiliegenden Zeichnungen näher erläutert werden. Diese zeigen in
Fig. 1 die Ausführungsform eines Tauchrohres innerhalb eines Rundbeckens;
Fig. 2 ist eine Draufsicht auf Fig. 1;
Fig. 3 zeigt eine Einzelheit eines Auslaufs;
Fig. 4 und Fig. 5 zeigen eine besondere Ausführungsform des Tauchrohrs mit dem Ziel, gleichförmige nicht zu große Strömungsgeschwindigkeiten zu erhalten.

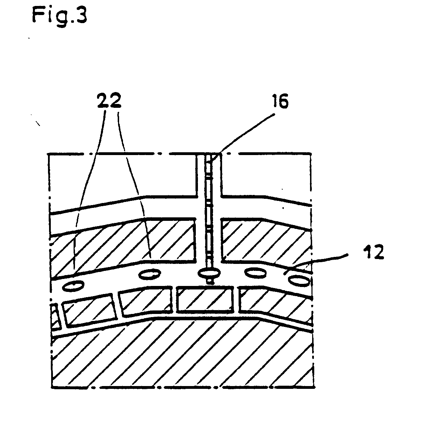

In einem Rundbecken 10, im allgemeinen aus Beton, ist äquidistant vom Beckenrand eine Sammelleitung 12 angeordnet, und zwar im getauchten Zustand im Abstand unterhalb des Freispiegels 14. Bei 24 befindet sich ein definierter Einlauf mit Steuerung der Umlenkung, was hier nicht näher aufgeführt ist. An dieser Stelle kann ein Mittelbauwerk mit einer sog. Coanda-Tulpe sitzen. Das Wasser strömt also über den Einlauf 24 zu. Das geklärte Wasser wird definiert über eine Ringleitung 12 abgezogen, die, wie Fig. 3 zeigt, unter gleichem Abstand Schlitze 22 aufweist. Diese Schlitze können Mindesbreiten von 10 mm haben. Von der Austrittssammelleitung strömt das geklärte Abwasser in die Austrittsleitung 16, und zwar wird im Bereich des Übertritts aus der Sammelleitung 12 in die Austrittsleitung 16 das Wasser die maximale Strömungsgeschwindigkeit, am gegenüberliegenden Ende 12' eine Geschwindigkeit von praktisch Null, haben. Nach dem Austritt aus der Austrittsleitung 16 tritt das Wasser in eine Einrichtung mit Regulierschwelle 23 ein. Da diese Regulierschwelle, wie durch den Doppelpfeil angedeutet, heb- und senkbar ist, ist der Einlauf unabhängig vom Ablauf und die Flüssigkeitsstandhöhe im Rundbecken unabhängig vom Austritt regelbar. Sammelleitung 12 und Austrittsleitung 16 sind immer voll gefüllt. Aus der Regulierschwelle strömt das Wasser in einen nicht dargestellten Ablaufschacht. Es ist auch möglich, die Höhenverstellbarkeit der Regulierschwelle 23 zu automatisieren. Immer ist die (Druck)höhendifferenz verantwortlich für das Gefälle und die Geschwindigkeit.

Nach einer anderen Ausführungsform ist es auch möglich, die Austrittsleitung 16 nach oben zu führen und etwa über einen V-Querschnitt das Wasser definiert austreten zu lassen. In diesem Fall wäre dann das Rohr selbst in gewissen Grenzen heb- und senkbar ausgebildet bzw. eine ihm zugeordnete Einrichtung wäre es.

Bei der Steuerung der Druckhöhendifferenz zwischen dem Freispiegel 14 und dem Flüssigkeitsstand 20 in der Regulierschwelle 23 sind noch Rohrreibungsverluste, Verluste durch Flüssigkeitsreibung, Beschleunigungsverluste beim Eintritt der Flüssigkeit in die verschiedenen Schlitze der Sammelleitung 12 und gegebenenfalls Verluste aufgrund turbulenter Strömung zu berücksichtigen.

Es wird immer ein volles Rohr betrieben.

Da das Tauchrohr immer unter Druck durchströmt wird, ist es an sich unerheblich, ob die Zuflußöffnungen am Rohrscheitel, an der Seitenwand oder an der- Rohrsohle angebracht sind.

Durch die oben erwähnte vorzugsweise Ausbildung der Zuflußöffnungen am Tauchrohr, beispielsweise als Schlitze von mindestens 10 mm Breite, ist es durch Veränderungen der Schlitzlänge möglich, eine Anpassung an die hydraulischen Randbedingungen herbeizuführen.

Für den Zufluß aus dem Becken in das Tauchrohr ist dies der Unterschied zwischen dem Druck außerhalb des Rohres, der bei konstantem Wasserspiegel gleich ist und dem Rohrinnendruck, der vom örtlich veränderlichen Zufluß im Tauchrohr abhängt.

Nach Obigem wird das Tauchrohr selbst über die Ablaufleitung mit dem Ablaufschacht verbunden. Insbesondere bei Rundbecken mit Durchmessern von mehr als 50 Metern, ist gegebenenfalls eine zweite Ringleitung näher zur Beckenmitte vorzusehen. Die Ablaufleitung dieser zweiten Ringleitung mündet dann ebenfalls im Ablaufschacht. In Abwandlung der oben beschriebenen Maßnahme ist es schließlich möglich, die Vorrichtung ebenfalls zur Entnahme aus Rechteckbecken zu verwenden.

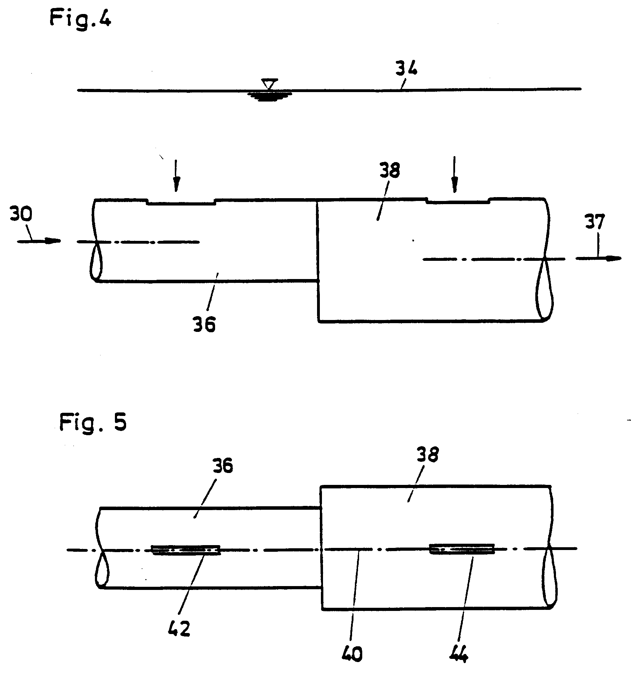

Die Figuren 4 und 5 zeigen ein Tauchrohr, einmal in der Ansicht (Fig. 4), einmal in der Draufsicht (Fig. 5).

Das Tauchrohr ist von der Anströmseite zur Abströmseite gegen zunehmende Querschnitte gestuft, wobei das Rohr oben bündig, unten gestuft verläuft, wie aus den Figuren 4 und 5 ersichtlich. Die Strömung erfolgt von links 30 nach rechts 32, das Tauchrohr ist natürlich bei dieser Ausführungsform ebenfalls immer unterhalb des Wasserspiegels 34 angeordnet. Die Querschnitte sind auf dem Zufluß abgestimmt, also bei 36 ein kleinerer Querschnitt, bei 38 ist ja bereits mehr Wasser zugeströmt, der größere Querschnitt. In der Draufsicht sieht man, daß die Rohrabschnitte zueinander symmetrisch bezüglich der Mittelachse 40 angeordnet sind. Dagegen werden bei dieser Ausführungsform die Schlitze 42, 44 zum Auslauf hin kleiner, d.h. L1 --> L2. Hierdurch wird die Strömung vergleichmäßigt. Es wird erreicht, daß beispielsweise eine maximale Strömungsgeschwindigkeit von 0,3 m/sec. eingehalten werden kann.

## Patentansprüche

1. Vorrichtung zur über den Beckenumfang gleichmäßig verteilten Entnahme von geklärtem Abwasser aus Rundbecken, die übereine zentrische Einleitung des Abwassers verfügen, mit einem mit Durchbrechungen versehenen unter Druck durchströmten Tauchrohr, dadurch gekennzeichnet, daß das Tauchrohr als unterhalb der Oberfläche des geklärten Abwassers konzentrisch zur Vertikalachse des Rundbeckens angeordnete geschlossene Ringleitung (12) ausgebildet ist und daß die Ringleitung mit dem außerhalb des Rundbeckens angeordneten Ablaufschacht über eine Austrittssammelleitung (16) verbunden und mit einer Mengensteuerung derart versehen ist, daß die Veränderung des Höhenunterschiedes zwischen dem Wasserstand im Becken und dem Wasserstand im Ablaufschacht die Menge steuert.

2. Vorrichtung nach Anspruch 1, gekennzeichnet durch eine einzige Austrittssammelleitung, die zum gleichmäßigen Abzug durch die Beckenwand geführt ist.

3. Vorrichtung nach Anspruch 1 oder 2, gekennzeichnet durch eine Ausbildung des Tauchrohres und der Steuerung derart, daß auf eine mittlere Geschwindigkeit von 0,3 m/s am Ende der Tauchrohrleitung begrenzt wird.

4. Vorrichtung nach Anspruch 1 oder 2, dadurch gekennzeichnet, daß die geschlossene und unter Druck betriebene Tauchrohrringleitung (12) so ausgebildet ist, daß die Ablaufgeschwindigkeit am Austritt aus der Rohrleitung maximal, dem Austritt diametral gegenüber nahe null ist.

5. Vorrichtung nach einem der Ansprüche 1 bis 3, dadurch gekennzeichnet, daß sie von einer Ausbildung der Art ist, daß die Zuströmungsgeschwindigkeit über die Erstreckung des Tauchrohres im wesentlichen konstant gehalten ist.

6. Vorrichtung nach einem der vorhergehenden Ansprüche, dadurch gekennzeichnet, daß die Überstauung über dem Tauchrohr unabhängig von der Abflußmenge regelbar ist.

7. Vorrichtung nach Anspruch 1, gekennzeichnet durch einehöhenverstellbare Ablaufeinrichtung zum Auslaufschacht.

8. Vorrichtung nach Anspruch 7, dadurch gekennzeichnet, daß die höhenverstellbare Ablaufeinrichtung eine schwimmergesteuerte Drosselklappe ist.

9. Vorrichtung nach Anspruch 1, dadurch gekennzeichnet, daß mit dem Schwimmer der Beckenwasserspiegel abgreifbar ist.

10. Vorrichtung nach einem der vorhergehenden Ansprüche, dadurch gekennzeichnet, daß die Ringleitung (12) äquidistant zum zentrischen Zulauf (24) und äquidistant zum Beckeninnenumfang angeordnet ist.

11. Vorrichtung nach einem der vorhergehenden Ansprüche, dadurch gekennzeichnet, daß das Rundbecken ein Pufferbecken ist.

12. Vorrichtung nach einem der vorhergehenden Ansprüche, dadurch gekennzeichnet, daß insbesondere bei Rundbecken mit Durchmessern von mehr als 50 Metern, gegebenenfalls eine zweite Ringleitung näher zur Beckenmitte vorgesehen ist, wobei die Ablaufleitung dieser zweiten Ringleitung ebenfalls im gleichen einzigen Ablaufschacht mündet.

13. Vorrichtung nach einem der vorhergehenden Ansprüche, dadurch gekennzeichnet, daß das Tauchrohr zum Austritt hin zunehmenden Querschnitt beginnend von der der Austrittssammelleitung gegenüberliegenden Stelle hat.

14. Vorrichtung nach Anspruch 13, dadurch gekennzeichnet, daß das Tauchrohr sich allmählich bzw. gestuft (36;38) aufweitet.

15. Vorrichtung nach Anspruch 14, dadurch gekennzeichnet, daß die abgestuften Rohrsegmente (36;38) oben bündig, unten gestuft ausgebildet sind.

## Claims

1. An apparatus for the withdrawal of clarified waste water from circular basins the withdrawal being uniformly approportioned over the circumference of the basins which basins have a central waste water inlet, the apparatus comprising a submerged pipe provided with openings, the flow in the pipe being under pressure, **characterized in that** the submerged pipe is constructed as a closed ring conduit (12) below the surface of the clarified waste water concentrically arranged with regard to a vertical axis and that the ring pipe by means of an efflux collecting unit (16) is connected to a drainage duct and is provided with a quantitiy control such that the modification of the height difference between the water level in the basin and the water level in the drainage duct will control the quantity.

2. Apparatus according to claim 1, characterized by an only efflux collecting conduit (16) which for uniform withdrawal is conducted through the wall of the basin.

3. Apparatus according to claims 1 or 2, characterized by a construction of the submerged pipe and of the control such that at the end of the submerged conduit limitation to a mean velocity of 0,3 m/s is brought about.

4. Apparatus according to claims 1 or 2, characterized in that the closed submerged ring conduit (12) operated under pressure is of a construction such that the discharge velocity at the exit from the pipe conduit is maximum, diametrically to the exit is nearly nill.

5. Apparatus according to one of claims 1 to 3, characterized in that it is of such construction that the entrance feeding velocity over the extension of the submerged pipe is kept substantially constant.

6. Apparatus according to one of the preceding claims, characterized in that the flooding above the submerged pipe can be regulated independently of the amount drained.

7. Apparatus according to claim 1, characterized by an outflow device to the drainage duct that is adjustable in height.

8. Apparatus according to claim 7, characterized in that the height adjustable efflux means is a float-controlled throttle valve.

9. Apparatus according to claim 1, characterized in that with the float the level of the basin can be sensed.

10. Apparatus according to one of the preceding claims, characterized in that the ring conduit is equidistantly arranged to the centric inflow (24) and equidistantly to the inner circumference of the basin.

11. Apparatus according to one of the preceding claims, characterized in that the circular basin is a buffer tank.

12. Apparatus according to one of the preceding claims, characterized in that in particularly in case of circular basins having diameters of more than 50 m, a second ring conduit is possibly provided nearer the center of the basin, the drainage conduit of said second ring conduit also discharging into the same single drainage duct.

13. Apparatus according to one of the preceding claims, characterized in that the submerged pipe has a cross-section which increases toward the outlet, starting from the point situated opposite the efflux collecting conduit.

14. Apparatus according to claim 13, characterized in that the submerged pipe widens gradually or in a stepped manner (36; 38).

15. Apparatus according to claim 14, characterized in that the stepped pipe segments (36; 38) are constructed so as to be flush at the top and stepped at the bottom.

## Revendications

1. Dispositif pour prélever, d'une manière uniformément répartie sur la périphérie d'un bassin, des eaux résiduaires clarifiées à partir de bassins circulaires, qui disposent d'un système d'introduction central des eaux résiduaires, et comportant un tube plongeur pourvu de perçages et traversé par un écoulement sous pression, caractérisé en ce que le tube plongeur est agencé sous la forme d'une conduite annulaire fermée (12), qui est disposée au-dessous de la surface des eaux résiduaires clarifiées, concentriquement par rapport à l'axe vertical du bassin circulaire, et que la conduite annulaire est reliée au puits d'évacuation, situé à l'extérieur du bassin circulaire, au moyen d'une conduite de collecte de sortie (16) et est équipée d'une unité de commande de quantité de telle sorte que la modification de la différence de hauteur entre le niveau de l'eau dans le bassin et le niveau de l'eau dans le conduit d'évacuation commande la quantité.

2. Dispositif selon la revendication 1, caractérisé par une seule conduite de collecte de sortie, qui est guidée à travers la paroi du bassin pour une évacuation uniforme.

3. Dispositif selon la revendication 1 ou 2, caractérisé par un agencement du tube plongeur et de l'unité de commande de manière à obtenir une vitesse moyenne limitée à 0,3 m/s à l'extrémité du tube plongeur.

4. Dispositif selon la revendication 1 ou 2, caractérisé en ce que la conduite annulaire (12) du tube plongeur, qui est fermée et est placée sous pression, est agencée de telle sorte que la vitesse d'évacuation est maximale à la sortie de la conduite du tube et est presque nulle dans une position diamétralement opposée à la sortie.

5. Dispositif selon l'une des revendications 1 à 3, caractérisé en ce qu'il possède un agencement tel que la vitesse d'amenée est maintenue sensiblement constante sur l'étendue du tube plongeur.

6. Dispositif selon l'une des revendications précédentes, caractérisé en ce que l'accumulation au-dessus du tube plongeur est réglable indépendamment de la quantité d'évacuation.

7. Dispositif selon la revendication 1, caractérisé par un dispositif d'évacuation réglable en hauteur par rapport au conduit de sortie.

8. Dispositif selon la revendication 7, caractérisé en ce que le dispositif d'évacuation réglable en hauteur est un clapet d'étranglement commandé par un flotteur.

9. Dispositif selon la revendication 1, caractérisé en ce que le niveau de l'eau dans le bassin peut être détecté à l'aide du flotteur.

10. Dispositif selon l'une des revendications précédentes, caractérisé en ce que la conduite annulaire (12) est disposée de manière à être équidistante à l'arrivée centrale (24) et équidistante de la périphérie intérieure du bassin.

11. Dispositif selon l'une des revendications précédentes, caractérisé en ce que le bassin circulaire est un bassin tampon.

12. Dispositif selon l'une des revendications précédentes, caractérisé en ce que notamment dans le cas de bassins circulaires ayant des diamètres supérieurs à 50 mètres, il est éventuellement prévu une seconde conduite annulaire plus proche du milieu du bassin, la conduite d'évacuation de cette deuxième conduite annulaire débouchant également dans le même puits d'évacuation unique.

13. Dispositif selon l'une des revendications précédentes, caractérisé en ce que le tube plongeur possède une section transversale qui augmente en direction de la sortie à partir de la position située à l'opposé de la conduite de collecte de sortie.

14. Dispositif selon la revendication 13, caractérisé en ce que le tube plongeur s'élargit progressivement ou d'une manière étagée (36 ; 38).

15. Dispositif selon la revendication 14, caractérisé en ce que les segments étagés (36 ; 38) du tube sont alignés à leur partie supérieure et sont étagés à leur partie inférieure.
